Europäisches Patentamt

European Patent Office

Office européen des brevets

(11) Publication number: **0 123 503**

**B1**

## EUROPEAN PATENT SPECIFICATION

(45) Date of publication of patent specification: **07.01.88**

(51) Int. Cl.⁴: **E 21 B 19/16**

(21) Application number: **84302614.7**

(22) Date of filing: **17.04.84**

(54) Power tongs assembly.

(30) Priority: **21.04.83 US 487048**
**26.08.83 US 526611**

(43) Date of publication of application:
**31.10.84 Bulletin 84/44**

(45) Publication of the grant of the patent:
**07.01.88 Bulletin 88/01**

(84) Designated Contracting States:
**DE FR GB IT**

(56) References cited:
**FR-A-1 513 654**
**US-A-4 305 472**
**REGELUNGSTECHNIK, vol. 2, no. 4, 1954, page 74, Munich, DE; G. KLEE:**

**"Ausführungsbeispiele und Eigenschaften pneumatischer Messwertwandler"**

**ÖLHYDRAULIK UND PNEUMATIK, vol. 16, no. 12, December 1972, pages 513-516, Mainz, DE; H. SCHINK: "Pneumatische Messumformer"**

(73) Proprietor: **BILCO TOOLS INC.**
**Houma**
**Terrbone Parish Lousiana (US)**

(72) Inventor: **Coyle, William Earl**
**3300 Sharon Street**
**Houma Louisiana 70360 (US)**

(74) Representative: **Skone James, Robert Edmund et al**
**GILL JENNINGS & EVERY 53-64 Chancery Lane London WC2A 1HN (GB)**

(56) References cited:
**MACHINE DESIGN, vol. 34, no. 23, 27th September 1962, pages 163-165, Cleveland, USA; M.E. LONG: "Controlling cylinder speed"**
**PETROLEUM ENGINEERING INTERNATIONAL, vol. 52, no. 8, July 1980, pages 62-71, Dallas, Texas, USA; P. ANTHONY: "Torque-turn in principle and practice"**

Courier Press, Leamington Spa, England.

## Description

This invention relates to a power tongs assembly for automatically controlling power tongs to obtain a predetermined limited torque while making up drill pipe.

In making up a pipe string for an oil well, a series of sections or joints having threaded ends are assembled in series as the pipe progresses into the well. The threaded connections are made by rotating a pipe joint by means of power tongs while holding the next lower joint stationary. It is generally desirable and frequently required that some automatic means be provided to apply a predetermined torque to the joints since over-torquing can damage the threads particularly with some modern pipe material chosen for characteristics other than strength. On the other hand, undertorquing can result in leakage or unintentional disassembly of the joints. In some makeup operations, it is required not only that makeup torque be closely monitored but also that a permanent record be made of the makeup torque at each threaded connection.

The prior art includes numerous hydraulic power tongs, many of which are in the public domain, of the type having a hydraulic motor connected via a gear train to a rotary member having jaws for gripping the pipe. There are various known ways of limiting power tongs torque. One approach is simply to limit the hydraulic pressure differential across the motor; knowing the pressure-torque relationship of the motor and the ratio of the gear train, a predetermined makeup torque can thus be achieved. This approach is illustrated in US—A—3,719,237, for example. Another known approach is physically to connect a torque or load transducer to the tongs. US—A—4,199,032; US—A—4,305,472; US—A—3,745,820 and US—A—4,091,451 illustrate tongs that are restrained against rotation with the pipe joint by a so-called snub line in which a load cell is mounted. The output of the load cell may be hydraulic pressure, as in US—A—4,199,032 and US—A—4,305,472; or an electrical output may be produced, as in US—A—3,745,820 and US—A—4,091,451. To achieve tongs cut-off at a particular torque level, the transducer may be linked to hydraulic control means in the tongs' hydraulic drive circuit. US—A—4,305,472 shows one approach employing a shunt valve which, when opened, allows fluid to bypass the tongs. This releases the torque instantaneously, which is undesirable as it does not allow the threads to set and gives reduced uniformity in the effective madeup torque from joint to joint.

Some of the prior art systems are indeed quite sophisticated, in the sense of being complex; applicant has found, however, that such systems have drawbacks so serious as to render them undesirable to potential customers. Besides the obvious expense of the complex systems, they tend to be fragile, incapable of repair in the field by people not specially trained for the purpose, and may result in unacceptable delays when they fail. Owing to their cost, it is not feasible to maintain a suitable number of spares on hand, and where the driller must maintain a permanent record of makeup torque at each joint, the entire drilling operation may be brought to a halt by failure of the torque controller.

It is therefore an object of the invention to provide the industry with a power tongs assembly capable of reliably limiting applied tongs torque at a predetermined level, maintaining the variations from the desired torque from joint to joint to a very small figure, and making a graphic permanent record of makeup torque while avoiding the disadvantages of the prior art. To these ends the applicant has set out to create a system avoiding the complexities of prior systems, particularly avoiding complex computers, electronic modules and the like while still achieving the primary goal of reliable, accurate torque control.

In accordance with the present invention, a power tongs assembly comprises power tongs having an hydraulic motor thereon; a pair of hydraulic lines for connecting the tongs motor to a high pressure pump; a snub line for restraining the tongs against rotation; an hydraulic load transducer attached to the snub line so that the hydraulic transducer produces a pressure output proportional to torque developed by the tongs for selectively opening or closing a shunt valve connected between the lines; and a control system including a pressure sensor supported at one end and connected to the transducer output, and switching means, for controlling an actuator for the shunt valve, and is characterised in that the control system comprises a Bourdon tube; in that the switching means is adjustably supported adjacent the free end of the Bourdon tube, the condition of the switching means being adjustable in response to movement of the Bourdon tube due to changes of pressure in the tube, whereby operation of the tongs is automatically halted when a predetermined torque corresponding to a predetermined pressure in the Bourdon tube is reached; and in that the assembly further comprises a choke valve connected in series with the shunt valve between the hydraulic lines, the choke valve being adapted to resist the flow of fluid therethrough so that once the shunt valve opens, substantial pressure is maintained across the tongs hydraulic motor whereby torque is maintained upon a pipe joint engaged by the tongs jaws after operation of the tongs has been halted by the opening of the shunt valve.

The switching means is adjustably mounted relative to the Bourdon tube so that a predetermined threshold pressure, and by inference a corresponding tongs torque, can readily be adjusted.

Preferably, the assembly further comprises a timer for holding the shunt valve open for a predetermined time period following the initial automatic opening of the valve whereby the tongs are positively prevented from operating during the time period. This, preferably electronic, timer, once the shunt valve has been opened by the closure of the switching means, continues to energize the valve actuator, thereby holding the valve open for a predetermined time period. This timer prevents dangerous reapplication of torque to the tongs immediately following the initial disabling of the tongs, yet automatically resets the shunt valve in its closed position after enough time has passed for the operator to disable the tongs manually.

In one example, wherein the shunt valve is pneumatically actuated the assembly further comprises a pilot valve comprising a pair of aligned, spaced jets and a blocking member interposable between the jets, the blocking member being attached to the movable end of the Bourdon tube such that the member obstructs the flow of air between the jets only above the predetermined torque, and means controlled by the pilot valve for operating the shunt valve. This system is entirely non-electric, making it safe for use in explosive atmospheres.

As a further feature, the assembly may further comprise a choke valve which is adjustable and a check valve connected in parallel between the pilot valve and the shunt valve actuator such that the shunt valve opens immediately upon the predetermined torque being reached, but is delayed in closing for a predetermined adjustable short period after the torque is relieved, to permit the tongs to be deactivated manually. This feature prevents dangerous reapplication of the torque to the tongs immediately following the initial disabling of the tongs, yet automatically resets the shunt valve to its closed position once enough time has passed for the operator to disable the tongs manually.

Conveniently there is provided, in series with the tongs motor, hydraulic means for limiting the rotational speed of the tongs, regardless of the tongs torque load.

Some examples of assemblies in accordance with the present invention will now be described and contrasted with a prior art example with reference to the accompanying drawings, in which:—

Figure 1 illustrates a prior art assembly;

Figure 2 illustrates a modified form of the prior art assembly;

Figure 3 shows a modification of the Figure 2 assembly;

Figure 4 shows a first example according to the present invention;

Figure 5 shows a second example according to the present invention; and,

Figure 6 is a schematic diagram showing in detail the pneumatic control circuitry shown in block form in Figure 5.

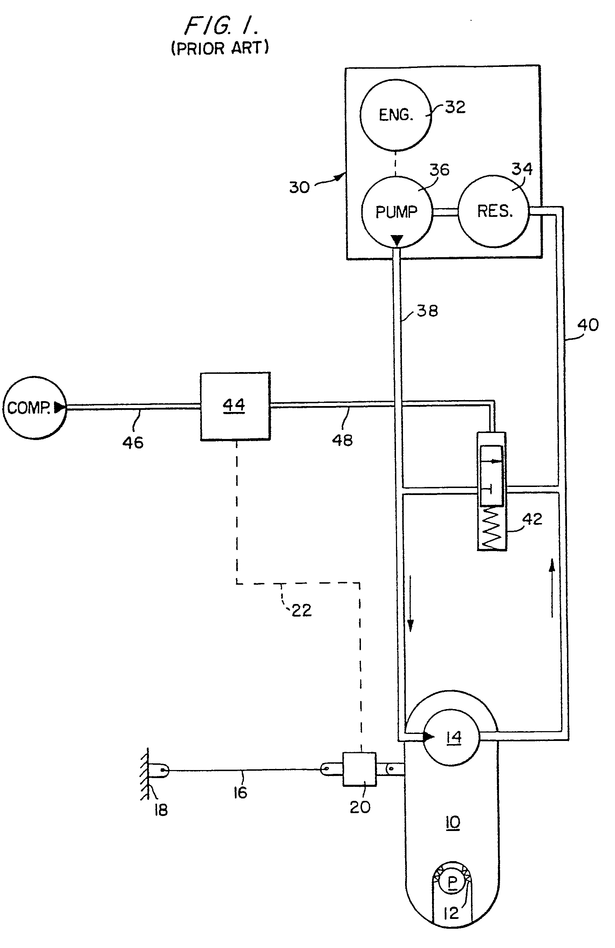

A known prior art tongs system or assembly is shown in Figure 1 as including a power tongs 10 having jaws 12 for engaging a pipe P. The tongs have a hydraulic motor 14 which is mechanically connected to the jaws for rotating the same by a gear train (not shown). The tongs are capable of developing several thousand foot pounds (i.e.

several thousand Newton meters) of torque; they are therefore restrained from rotating about the pipe by a snub line 16, one end of which is secured to a stationary support 18 and the other end of which is secured to the tongs.

To determine the torque being applied to the pipe by the tongs at any moment, a hydraulic load transducer 20 is connected in the snub line 16. This transducer includes a piston or the like which generates a pressure in a transducer conduit 22 that is proportional to the load in the snub line. This pressure is used to control tongs operation as described hereafter.

The motor of the power tongs is driven by high pressure hydraulic fluid generated at a power unit to which the power tongs assembly is connected. This unit includes an internal combustion engine 32, a reservoir 34 and an hydraulic pump 36 driven by the engine. High pressure fluid passes from the pump 32 via a high pressure hose 38 to the inlet of the tongs motor 14. A return hose 40 is connected between the outlet of the tongs motor and the reservoir 30, and a pneumatically actuated shunt valve 42 is connected between the inlet and outlet to the motor. This valve is normally closed, but when opened, allows fluid from the power unit to bypass the tongs motor thereby halting the tongs. The structure described to this point is found both in examples of the present invention and in US—A—4,305,472 (which uses different reference numerals). This prior art also has a pneumatic controlling device 44 responsive to pressure in the transducer conduit 22 which automatically applies compressed air from a source 46 to a line 48 when a predetermined tongs torque is reached to open the pneumatically actuated shunt valve 42 and thereby halt the tongs operation.

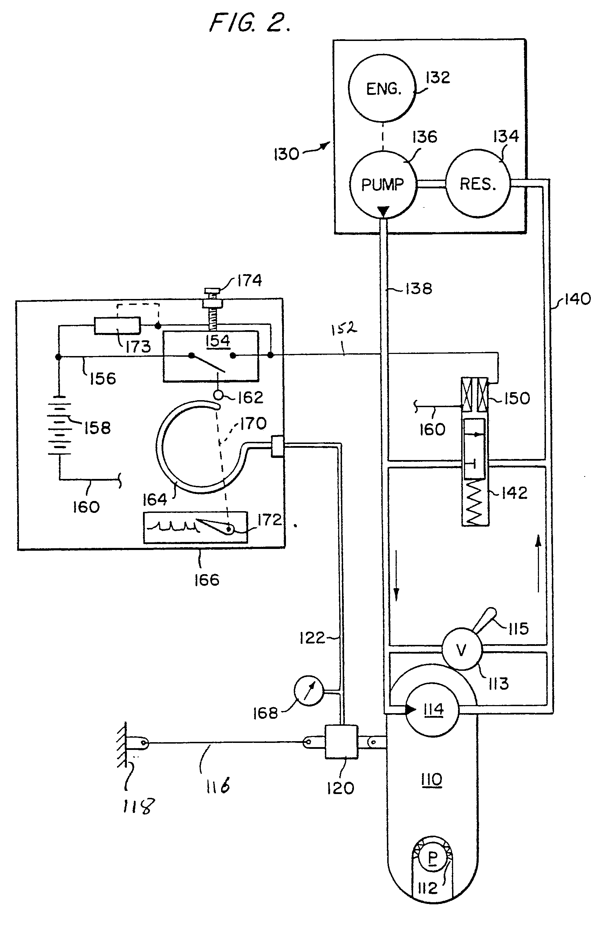

Figure 2 shows a modified embodiment of the prior art assembly shown in US—A—4,305,472. Figure 2 illustrates a tongs 110 having jaws 112 and a motor 114 that is hydraulically connected by lines 138 and 140 to a power unit 130 having an engine 132, a reservoir 134 and a pump 136. A bypass valve 113 is located on the tongs between the lines 138 and 140. This valve may be manually opened or closed by operating a lever 115 thereon.

The tongs are restrained from rotating around the pipe P by a snub line 116 connected to a stationary support 118 at one end and to an hydraulic transducer 120 at the other, which has an outlet conduit 122. Parallel to the bypass valve 113, a shunt valve 142 is connected between the inlet and outlet lines to the tongs motor 114. Here there is divergence from the prior art in that the dump valve has a solenoid actuator 150 connected by a conductor 152 to one terminal of a switch 154. The other terminal of the switch 154 is connected by a connector 156 to one terminal of a dry cell battery 158. A ground line 160 completes the circuit. The switch has a projecting actuator 162 which when depressed closes the switch, and the end of this actuator is positioned in proximity to the free, closed end of a Bourdon tube 164. The other end of the Bourdon tube 164 is firmly supported by an enclosure 166 and is in fluid communication with the transducer output conduit 122 previously referred to. A conventional gauge 168 is also connected to the transducer output. It is preferred that the face of the gauge 168 be calibrated to indicate the torque being applied by the power tongs 110 and this calibration would of course require consideration of the transducer load-to-pressure relationship as well as the radial distance from the pipe P to the snub line 116.

In this system the free end of the Bourdon tube 164 is connected by an appropriate mechanical linkage 170, indicated schematically by a broken line, to the arm of a stylus recorder 172. As mentioned above, it is frequently required to make a running record of torque supplied as the pipe is assembled and the recorder provides a permanent record.

Another important aspect of this example is the provision of means for holding the shunt valve 142 open for a period of time sufficient for the tongs operator to manually deactivate the tongs 110. It will be appreciated that without this feature, the instant the dump valve was activated, and the tongs torque thereby released, the transducer pressure would go to zero, the Bourdon tube 164 would retract and the switch 154 would open, possibly causing rapid, dangerous reapplication of full tongs torque in a rapidly cyclic fashion.

To avoid this problem, a timer 173 is provided in the electrical circuit which functions to maintain the application of electrical power to the solenoid dump valve for a predetermined time after it is actuated, regardless of whether the switch 154 is opened or closed. This timer is preferably adjustable so that the mandatory tongs-off interval can be adjusted from, say, two to four seconds. Such an interval gives the operator sufficient time to deactivate the tongs 110 manually, without disabling the tongs so long as to slow the makeup operation.

In operation of this device, the power unit 130 continuously operates, producing high pressure fluid in the quantities required for the tongs 110. The tongs 110 are placed around the pipe P and the operator manually throws the lever 115 thereby closing the bypass valve 113 and applying full pressure to the tongs, which cause the pipe joint to rotate as it is threaded into the next section below. When the threads are nearly completely engaged, the torque rises rapidly as does the snub line tension and therefore the pressure in conduit 122. The Bourdon tube 164 correspondingly distends, engaging the switch actuator 162 and eventually closing the switch 154. At this point electrical power is applied to the solenoid 150 opening the shunt valve 142 and causing the tongs torque to drop to zero. Once the switch is closed, the timer 173 maintains the circuit between the battery and the solenoid in a closed condition for a period of time and during this time the operator manually opens the valve 113. Thereafter, at the end of the interval for which the timer is set, the circuit is reopened, closing the shunt valve 142 so that the operator upon throwing the handle 115 can initiate another operating cycle.

An important feature is that not only can the timer mechanism be adjusted but so can the threshold pressure at which the switch 158 becomes closed. This is accomplished by providing a simple threaded support 174 between the enclosure 166 and the switch body whereby the distance between the actuator 162 and the free end of the Bourdon tube 164 can be varied.

It will be appreciated that either or both of these variables could be made fixed.

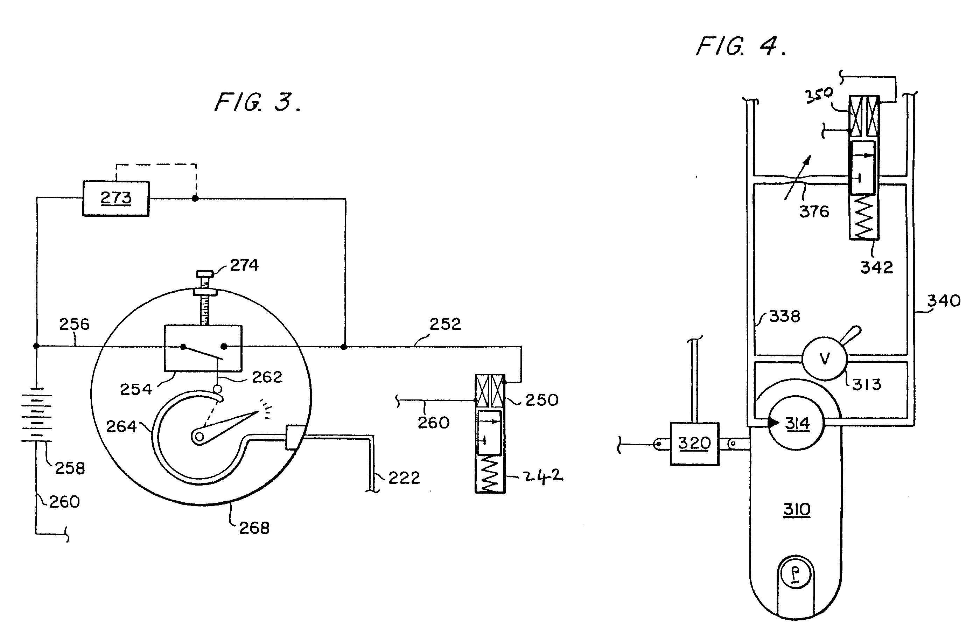

Figure 3 illustrates a modification of the system shown in Figure 2. In this modification the recorder has been dispensed with and replaced by a simple pressure gauge 268, preferably calibrated to show tongs torque. The pressure gauge 268 includes a Bourdon tube 264, the distendible end of which is connected by a suitable linkage to the gauge pointer. The gauge contains electrical elements corresponding to the Figure 2 embodiment, specifically a switch 254 having a protruding actuator 262 engageable by the free end of the Bourdon tube 264, the switch preferably having an adjustable threaded mounting means 274 as shown. As in the previous embodiment, the switch is connected by conductors 252, 256, and 260 between a battery 258 and the solenoid actuator 250 of a shunt valve 242. The remainder of this system is structurally identical to that of Figure 2 and its operation is also similar.

Figure 4 illustrates a first example of the invention in which means are provided for maintaining substantial torque upon the pipe P even after a shunt valve 342 has been opened by the controller upon reaching the threshold cutoff torque. The power unit is identical to that previously shown and the control mechanism may be as in either Figure 2 or Figure 3; therefore, only the portion of the system in the vicinity of the tongs is illustrated. As shown, the tongs 310 have a hydraulic motor 314 connected by hydraulic lines 338 and 340 to the power unit not shown. Between the lines 338 and 340, there is as before a manually operable bypass valve 313 and parallel to this valve also extending between the lines 338 and 340 is a shunt controlled by the shunt valve 342. What is different here is the addition of an adjustable choke 376 in the shunt in series with the valve 342. In operation the manually operable bypass valve 313 will have been closed by the operator to activate the tongs 310 and the tongs will have rotated the pipe P into a fully madeup position. The pressure generated by the transducer 320 as this position was approached will have caused the controller (not shown) to activate the solenoid actuator 350 at the threshold torque thereby opening the valve 342. At this point the manually operable bypass valve 313 is still closed so that fluid can avoid passing through the motor 314 only by passing through the shunt valve 342 and the choke 376. Without the choke, as previously mentioned, there would be substantially no resistance to fluid flow and the pressure differential across the motor 314 would be substantially zero. However with the choke 376 a substantial pressure differential can be maintained so that the tongs which have ceased rotation will still continue to apply torque to the threaded connections for a period of time. This feature desirably allows the threads to set and will provide increased uniformity in the effective makeup torque from joint to joint. The choke 376 is preferably adjustable whereby the torque level on the pipe following opening of the valve 342 can be adjusted as desired. This torque will of course be readable on the indicator used and will persist until the bypass valve 313 is manually opened by the operator. As in the other embodiments, the shunt valve 342 is held open by the timer sufficiently long to enable the operator to safely open the valve 313, whereafter the shunt valve 342 is automatically reset.

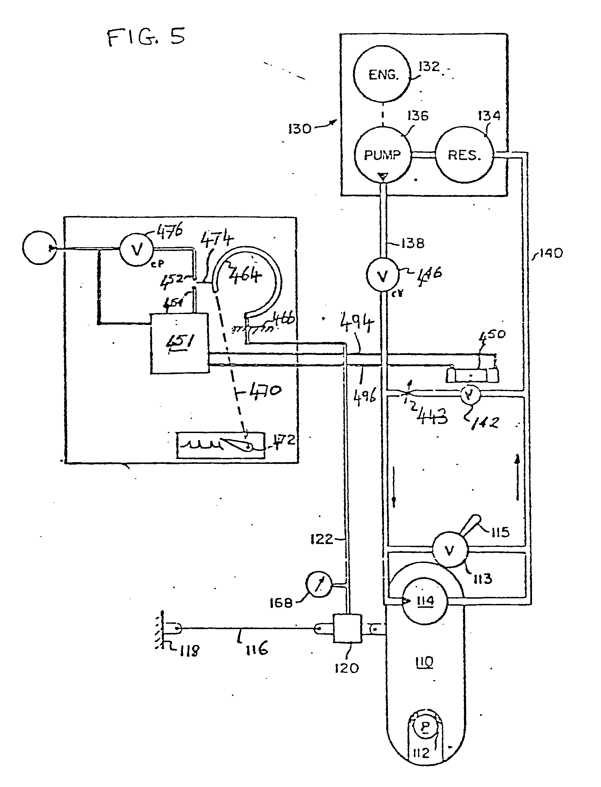

Figure 5 shows a second embodiment of the present invention. The assembly is similar to that shown in Figure 2, except for the control system.

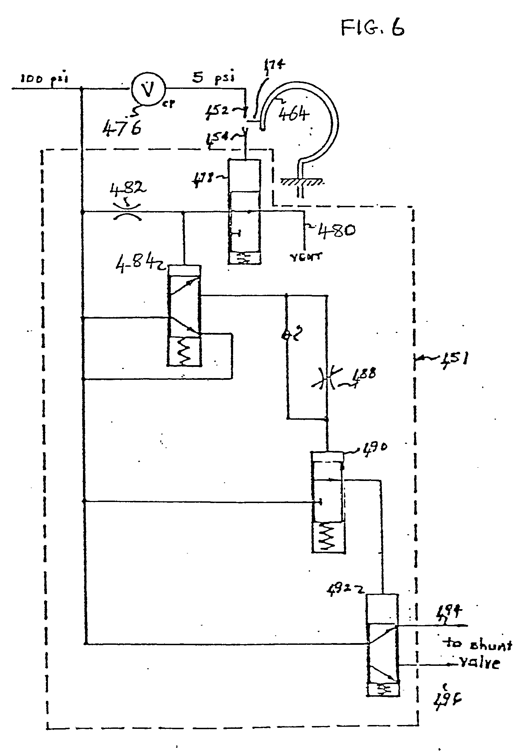

In this example the shunt valve is operated by a pneumatic actuator 450 which in turn is controlled by a pneumatic circuit shown in block form in Figure 5 and designated by reference numeral 451. Details of this circuit are shown in Figure 6 (described subsequently). The pneumatic circuit 451 is responsive to a pilot valve, comprising a pair of aligned jets 452 and 454, positioned in proximity to the closed end of a Bourdon tube 464. The other end of the Bourdon tube 464 is supported at 466 and is in fluid communication with the transducer output conduit 122 previously referred to. The free end of the Bourdon tube 464 may be connected by linkage 470 to a chart recorder 472 so that a running record of makeup torque can be produced.

The free end of the Bourdon tube has attached thereto a sheet metal finger 474 which functions as means for obstructing the flow of air from jet 452 to jet 454. The relative position of the parts is such that such obstruction occurs only when the Bourdon tube is distended by fluid pressure from the torque transducer 120 an amount sufficient to cause the finger 474 to move between the jets 452 and 454. Preferably, the jets are adjustably mounted with respect to the Bourdon tube 464 so that the threshold torque can be varied.

Figure 6 shows schematically the pneumatic control circuit 451, and the jet pilot valve to which it is responsive, comprising jets 452 and 454. Air at high pressure (e.g. 100 psi or $7 \times 10^5$ Pa) is supplied to the system at the upper left of the drawing. A pressure regulator 476 is provided to maintain pressure delivered to the jet 452 at only 5 psi ($3.5 \times 10^4$ Pa). Normally, air emitted from jet 452 passes unobstructed to jet 454, creating a static pressure therein sufficient to hold a first valve 478 open as illustrated. This allows venting at 480 of air passing through an orifice 482, so that the control pressure on a second valve 484 is low, preventing the delivery of pressure to a third valve 490. The normally inactive control line extending between valves 484 and 490 is provided with a check valve 486 and an adjustable orifice 488 in parallel, which serve to permit rapid opening of the normally closed valve 490, but only gradual closing thereof. The output of valve 490 controls the position of a fourth valve 492 whose function is to reverse the application of pneumatic pressure to the shunt valve actuator 450.

Returning to Figure 5, note the constant volume valve 446 shown in high pressure line 138. Suitable devices are commercially available, one such valve being available from Brand Hydraulics under Model No. FC-51. This device produces constant tongs speed, regardless of load, and serves to prevent the thread damage and inaccurate torquing that can result from making up pipe too rapidly.

In operation of the device, the power unit 130 is operating continuously, producing high pressure fluid to drive the tongs. The tongs are placed around the pipe P, and the operator throws the lever 115, thereby closing the bypass valve 113 and applying full pressure to the tongs, which rotate the pipe joint as it is threaded into the next section below.

During this initial period, the tongs speed is limited by volume control valve 446, regardless of load. As the threads engage further, the tongs reaction torque rises, as does the snub line tension and therefore the pressure applied to conduit 122 by the torque transducer 120. This pressure distends the Bourdon tube 464, moving the finger 474 toward the jets 452 and 454. When the pre-set threshold tongs torque is reached, the finger 474 will actually have moved between the jets, blocking the flow of air therebetween. This obstruction of jet 454 releases the pressure which maintained the valve 478 in its initial position, and so the valve 478 reverses. As a result, the valves 484, 490, 492 are reversed in rapid succession, stopping the tongs rotation by reversing the pressure applied to the actuator 450 through conduits 494, 496.

Once the tongs torque is reduced below the threshold torque, the finger 474 retracts, unblocking jet 454 and restoring valve 478 to its original open position. Valve 484 then closes, allowing valve 490 to reopen, but this latter valve is reopened only after a short delay, because of the action of adjustable orifice 488. The delay provided by the adjustable orifice 488 gives the operator time to open manually the valve 113, avoiding any sudden, unannounced reactivation of the tongs by the control circuit. The delay period, usually a few seconds, can be readily adjusted by varying the effective size of the orifice 488.

Furthermore, the threshold torque can be varied by altering the relative initial position of the finger 474 and the jets 452, 454. In addition, the flow control 446 can be adjusted, as can an adjustable choke 443 (corresponding to choke 376 in Figure 4). In all, the operator can control tongs torque, speed, and reset time, which is expected to produce an increased opportunity for safe, accurate, yet unimpeded makeup operations.

**Claims**

1. A power tongs assembly comprising power tongs (110, 310) having an hydraulic motor (114, 314) thereon; a pair of hydraulic lines (138, 140, 338, 340) for connecting the tongs motor (114, 314) to a high pressure pump (136); a snub line (116) for restraining the tongs against rotation; an hydraulic load transducer (120, 320) attached to the snub line (116) so that the hydraulic transducer produces a pressure output proportional to torque developed by the tongs for selectively opening or closing a shunt valve (142, 342) connected between the hydraulic lines (138, 140, 338, 340); and a control system including a pressure sensor (164) supported at one end and connected to the transducer output, and switching means, for controlling an actuator (150, 350) for the shunt valve (142, 342), characterised in that the pressure sensor comprises a Bourdon tube; in that the switching means is adjustably supported adjacent the free end of the Bourdon tube (164), the condition of the switching means being adjustable in response to movement of the Bourdon tube (164) due to changes of pressure in the tube, whereby operation of the tongs (110, 310) is automatically halted when a predetermined torque corresponding to a predetermined pressure in the Bourdon tube (164) is reached; and in that the assembly further comprises a choke valve (376) connected in series with the shunt valve (342) between the hydraulic lines (338, 340), the choke valve being adapted to resist the flow of fluid therethrough so that once the shunt valve (342) opens, substantial pressure is maintained across the tongs hydraulic motor (314) whereby torque is maintained upon a pipe joint engaged by the tongs jaws after operation of the tongs has been halted by the opening of the shunt valve (342).

2. An assembly according to claim 1, wherein the shunt valve actuator is a solenoid actuator (150), and the switching means comprises a limit switch (154) adjustably supported adjacent the free end of the Bourdon tube (164) so that the switch is closed by the tube when the pressure within the tube reaches the predetermined level, the switch, when closed, establishing an electrical connection between a battery (158) and the shunt valve solenoid actuator (150).

3. An assembly according to claim 1 or claim 2, further comprising a timer for holding the shunt valve (142) open for a predetermined time period following the initial automatic opening of the valve whereby the tongs (110) are positively prevented from operating during the time period.

4. An assembly according to claim 1, wherein the shunt valve (142) is pneumatically actuated; the assembly further comprising a pilot valve comprising a pair of aligned, spaced jets (452, 454) and a blocking member (474) interposable between the jets, the blocking member being attached to the movable end of the Bourdon tube (464) such that the member obstructs the flow of air between the jets only above the predetermined torque, and means (450) controlled by the pilot valve for operating the shunt valve (142).

5. An assembly according to claim 4, further comprising an adjustable choke valve (488) and a check valve (486) connected in parallel between the pilot valve and the shunt valve actuator (150) such that the shunt valve (142) opens immediately upon the predetermined torque being reached, but is delayed in closing for a predetermined adjustable short period after the torque is relieved, to permit the tongs (110) to be deactivated manually.

6. An assembly according to any of the preceding claims further comprising hydraulic means (446) for limiting the tongs speed to a preset, adjustable level regardless of the tongs torque.

7. An assembly according to claim 1, wherein the choke valve (376) is adjustable so that the pressure maintained across the tongs hydraulic motor (314) following the opening of the shunt valve can be regulated.

**Patentansprüche**

1. Eine kraftbetätigte Zangenanordnung umfassend eine kraftbetriebene Zange (110, 310) mit einem daran angeordneten hydraulischen Motor (114, 314); ein Paar hydraulischer Leitungen (138, 140, 338, 340) zur Verbindung des Zangenmotors (114, 314) mit einer Hochdruckpumpe (136); einen Haltestrang (116) zur Unterdrückung einer Drehung der Zange; einen hydraulischen Lastwandler (120, 320), der an dem Haltestrang (116) derart befestigt ist, daß der hydraulische Wandler einen Druckausgang erzeugt, der zu dem von der Zange entwickelten Drehmoment zum wahlweisen Öffnen oder Schließen eines Shunt- bzw. Nebenschlußventils (142, 342), das zwischen den hydraulischen Leitungen (138, 140, 338, 340) geschaltet ist, proportional ist; und ein Steuersystem, umfassend einen an einem Ende gehaltenen und mit dem Wandlerausgang geschalteten Drucksensor (164) sowie Schaltmittel, um ein Stellglied (150, 350) für das Schuntventil (142, 342) zu steuern, dadurch gekennzeichnet, daß der Drucksensor ein Bourdonrohr (Federrohr) umfaßt; daß die Schaltmittel nahe dem freien Ende des Bourdonrohrs (164) verstellbar gelagert sind, wobei der Zustand der Schaltmittel in Abhängigkeit von der Bewegung des Bourdonrohrs (164) infolge Druckänderungen in dem Rohr veränderbar ist, wodurch der Betrieb der Zange (110, 310) automatisch zum Stillstand gebracht wird, wenn ein einem vorbestimmten Druck in dem Bourdonrohr (164) entsprechendes vorbestimmtes Drehmoment erreicht wird; und daß die Anordnung weiter ein mit dem Shuntventil (342) zwischen den hydraulischen Leitungen (338, 340) in Reihe geschaltetes Drosselventil (376) umfaßt, das geeignet ist, dem es passierenden Flüssigkeitsstrom zu widerstehen, so daß bei Öffnen des Schuntventils (342) im Zangen-Hydraulikmotor (314) ein erheblicher Druck gehalten wird, wodurch auf einer Rohrverbindung, an der die Zangenbacken angreifen, ein Drehmoment aufrechterhalten wird, nachdem die Zangenbetätigung durch Öffnen des Shuntventils (342) zum Stillstand gebracht worden ist.

2. Eine Anordnung nach Anspruch 1, wobei das Shuntventil-Stellglied ein Magnet-Stellglied (150) ist und die Schaltmittel einen Grenzschalter (154) umfassen, der in der Nähe des freien Endes des Bourdonrohres (164) verstellbar getragen ist, so daß der Schalter von dem Rohr geschlossen wird, wenn der Druck in dem Rohr den vorbestimmten Wert erreicht, wobei der Schalter im geschlossenen Zustand eine elektrische Verbindung zwischen einer Batterie (158) und dem Shuntventil-Magnet-Stellglied (150) herstellt.

3. Eine Anordnung nach Anspruch 1 oder Anspruch 2, die weiter eine Zeitschalter zum Offenhalten des Shuntventils (142) über einen vorbestimmten, dem anfänglichen automatischen Öffnen des Ventils folgenden Zeitabschnitt umfaßt, wodurch die Zange (110) zwangsläufig gegen einen Betrieb während des Zeitabschnittes gesperrt wird.

4. Eine Anordnung nach Anspruch 1, wobei das Shuntventil (142) pneumatisch betätigt wird; und wobei die Anordnung weiter ein Schalt- oder Vorsteuerventil, das ein Paar zueinander ausgerichteter, beabstandeter Düsen (452, 454) und ein zwischen die Düsen bewegbares, an dem beweg baren Ende des Bourbonrohres (464) so befestigtes Sperrglied (474) umfaßt, daß der Glied den Luftfluß zwischen den Düsen nur oberhalb des vorbestimmten Drehmomentes behindert, sowie Mittel (450) umfaßt, die von dem Schaltventil zur Betätigung des Shuntventils (142) gesteuert werden.

5. Eine Anordnung nach Anspruch 4, die weiter ein einstellbares Drosselventil (488) und ein Absperrventil (486) umfaßt, die zwischen dem Schaltventil und dem Shuntventil-Stellglied (150) parallel so geschaltet sind, daß das Shuntventil (142) unmittelbar nach Erreichen des vorbestimmten Drehmoments öffnet, aber beim Schließen für einen vorbestimmten einstellbaren kurzen Zeitraum verzögert wird, wenn eine Drehmomententlastung erfolgt ist, um ein manuelles Außerbetriebsetzen der Zange (110) zu ermöglichen.

6. Eine Anordnung nach irgendeinem der vorangehenden Ansprüche, die weiter hydraulische Mittel (446) zur Begrenzung der Zangenschwindigkeit auf einen voreingestellten, veränderbaren Wert unabhängig von dem Zangendrehmoment umfaßt.

7. Eine Anordnung nach Anspruch 1, wobei das Drosselventil (376) so einstellbar ist, daß der im Zangen-Hydraulikmotor (314) nach dem Öffnen des Shuntventils aufrechterhaltene Druck regulierbar ist.

**Revendications**

1. Ensemble de pince hydraulique, comprenant une pince (110, 310) portant un moteur hydraulique (114, 314) pour sa manoeuvre; deux conduites hydrauliques (138, 140, 338, 340) reliant le moteur (114, 314) de la pince à une pompe à haute pression (136); une élingue de retenue (116) pour empêcher la pince de tourner; un transducteur de charge hydraulique (120, 320) qui est relié à l'élingue de retenue (116) de manière que le transducteur délivre un signal de sortie sous forme d'une pression qui est proportionnelle au couple développé par la pince, en vue de l'ouverture ou de la fermeture sélective d'une valve de dérivation (142, 342) montée entre les conduites hydrauliques (138, 140, 338, 340); ainsi qu'un système de commande comprenant un capteur de pression (164) supporté à une extrémité et relié à la sortie du transducteur, et un moyen de commutation pour actionner un organe de commande (150, 350) de la valve de dérivation (142, 342), caractérisé en ce que le capteur de pression est un tube de Bourdon; que le moyen de commutation est supporté réglabe près de l'extrémité libre du tube de Bourdon (164), l'état du moyen de commutation étant modifiable par le mouvement du tube de Bourdon (164) sous l'effet de changements de la pression dans le tube, l'agencement étant tel que le fonctionnement de la pince (110, 310) est arrêté automatiquement lorsqu'un couple prédéterminé correspondant à une pression prédéterminée dans le tube de Bourdon (164) est atteint; et que l'ensemble comporte en outre une soupape d'étranglement (376) montée en série avec la valve de dérivation (342), entre les conduites hydrauliques (338, 340), la soupape d'étranglement étant agencée pour résister à l'écoulement de fluide à travers elle, de manière que, après l'ouverture de la valve de dérivation (342), une pression substantielle soit maintenue entre l'entrée et la sortie du moteur hydraulique (314) de la pince, avec le résultat qu'un couple continue à être exercé sur un joint de tuyauterie tenu par les mâchoires de la pince après que le fonctionnement de la pince a été arrêté par l'ouverture de la valve de dérivation (342).

2. Ensemble selon la revendication 1, dans lequel l'organe de commande de la valve de dérivation est un électroaimant (150) et le moyen de commutation comprend un interrupteur de fin de course (154) qui est supporté réglable près de l'extrémité libre du tube de Bourdon (164), de manière que l'interrupteur soit fermé par le tube lorsque la pression dans le tube atteint le niveau prédéterminé, l'interrupteur, par sa fermeture, établissant une liaison électrique entre une pile (158) et l'électroaimant (150) de la valve de dérivation.

3. Ensemble selon la revendication 1 ou 2, comprenant en outre un temporisateur pour maintenir la valve de dérivation (142) ouverte pendant une durée prédéterminée à la suite de l'ouverture automatique initiale de la valve, de manière que la pince (110) soit empêchée efficacement de fonctionner pendant cette durée.

4. Ensemble selon la revendication 1, dans lequel la valve de dérivation (142) est commandée par voie pneumatique; l'ensemble comprenant en outre une soupape pilote avec deux buses (452, 454) espacées l'une de l'autre et mutuellement alignées, ainsi qu'un élément d'obstruction (474) susceptible d'être interposé entre les buses, l'élément d'obstruction étant attaché à l'extrémité mobile du tube de Bourdon (464), de manière à empêcher l'écoulement d'air entre les buses au-dessus du couple prédéterminé seulement, et un moyen (450) commandé par la soupape pilote et servant à la commande de la valve de dérivation (142).

5. Ensemble selon la revendication 4, comprenant en outre une soupape d'étranglement réglable (488) et un clapet antiretour (486), qui sont montés en parallèle entre la soupape pilote et l'organe de commande (150) de la valve de dérivation, l'agencement étant tel que la valve de dérivation (142) s'ouvre immédiatement lorsque le couple prédéterminé est atteint, mais que sa fermeture est retardée pendant une courte durée réglable et prédéterminée, à la suite de la réduction du couple, afin de permettre que la pince (110) soit désactivée manuellement.

6. Ensemble selon l'une quelconque des revendications précédentes, comprenant en outre un moyen hydraulique (446) pour limiter la vitesse de la pince à un niveau ajustable, préréglé, quel que soit le couple de la pince.

7. Ensemble selon la revendication 1, dans lequel la soupape d'étranglement (376) est ajustable, de sorte que l'on peut régler la pression maintenue sur le moteur hydraulique (314) de la pince à la suite de l'ouverture de la valve de dérivation.

# FIG. 1.
(PRIOR ART)

*FIG. 2.*

FIG. 3.

FIG. 4.

0 123 503

# 0 123 503

FIG. 5

FIG. 6